# EUROPEAN PATENT SPECIFICATION

(11) **EP 2 919 045 B1**
(45) Date of publication and mention of the grant of the patent: **08.08.2018**
(21) Application number: 13854159.4
(22) Date of filing: 08.11.2013
(51) Int. Cl.: G02B 5/08, G02B 5/04, G02B 27/22, G03B 35/18

(54) **LIGHT CONTROL PANEL FABRICATION METHOD**
HERSTELLUNGSVERFAHREN FÜR LICHTSTEUERUNGSPLATTE
MÉTHODE DE FABRICATION DE PANNEAU DE RÉGULATION DE LUMIÈRE

(30) Priority: 08.11.2012 JP 2012246263
(43) Date of publication of application: 16.09.2015
(73) Proprietor: Asukanet Company, Ltd., Hiroshima-shi, Hiroshima 731-0138 (JP)
(72) Inventor: OTSUBO Makoto, Hiroshima-shi, Hiroshima 731-0138 (JP)
(74) Representative: Vossius & Partner Patentanwälte Rechtsanwälte mbB
(86) International application number: PCT/JP2013/080288
(87) International publication number: WO 2014/073650

(56) References cited:
- EP-A2- 1 070 976
- WO-A1-2009/131128
- JP-A- H1 123 812
- JP-A- S5 144 186
- JP-A- 2008 102 278
- JP-A- 2009 025 621
- JP-A- 2010 132 532
- JP-A- 2012 128 456
- JP-A- 2015 090 387
- US-A1- 2004 263 976

## Description

### TECHNICAL FIELD

The present invention relates to a method for producing a light control panel for use in an optical imaging apparatus that forms a volumetric image in the air.

### BACKGROUND ART

As an optical imaging apparatus that forms a volumetric image by using light (scattering light) emitted from the surface of an object, Patent Literature 1 describes a technique to form an image of an object on the side opposite to the optical imaging apparatus by using a first light control panel and a second light control panel each formed by arranging, inside a transparent flat plate, a number of belt-like planar light-reflective portions perpendicularly to a surface on one side of the transparent flat plate, making one side of each of the first and the second light control panels face to face with each other in a manner that makes the planar light-reflective portions of the first light control panel and the planar light-reflective portions of the second light control panel orthogonal to one another, making light from the object (or a light source) incident upon the planar light-reflective portions of the first light control panel, and making reflected light reflected at these planar light-reflective portions re-reflect at the planar light-reflective portions of the second light control panel.

Also, Patent Literature 1 discloses making of a light control panel by making a laminated body through laminating a number of transparent synthetic resin plates (e.g., acrylic resin plates) or glass plates each having a metallic reflective surface consisting of a deposited layer (or a plated layer) of aluminum, silver or the like, which are examples of metals (the metallic reflective surface therefore becomes a both-sided reflective plate), formed on one surface side and each having a constant thickness in a manner that makes each metallic reflective surface arranged on one side, and through cutting out from this laminated body in a manner that forms a cut-out surface perpendicular to each metallic reflective surface.
Additionally, Patent Literature 2 also describes producing of light control panels by laminating a plurality of planar mirrors and cutting them in a longitudinal direction, and producing of a planar mirror by forming through methods such as one to deposit a metallic film such as tin, silver and aluminum on the surface of acrylic, glass and the like.

### CITATION LIST

### Patent Literature

Patent Literature 1: WO 2009/131128
Patent Literature 2: Japanese Unexamined Patent Application Publication No. 2011-081300

Further prior art is disclosed in JP 2012 128456 A, EP 1 070 976 A2, US 2004/263976 A1 and JP 2010 132532 A.

### SUMMARY OF INVENTION

### Technical Problem

However, producing light control panels by depositing a metallic reflective layer on the surface of a transparent synthetic resin plate, glass plate and the like requires a special deposition apparatus and is also time-consuming, there has been a problem of not being able to achieve inexpensive mass production. Moreover, sheets having metallic reflective surfaces formed thereon need to be laminated in large numbers in the end, which has made the work of laminating using an adhesive agent necessary.

The present invention has been made in view of the above circumstances, and an object thereof is to provide a method for producing a light control panel that is easily produced and for use in an optical imaging apparatus. Solution to Problem

In order to achieve the above object, a method for producing a light control panel according to the present invention is defined in claim 1.

In the case of the method for producing a light control panel according to the present invention, it is preferable to use a transparent adhesive agent for the joining of the transparent sheets and the mirror sheets. Here, it is preferable for the transparent adhesive agent to be a UV curing-type adhesive agent, and in this case, the UV curing-type adhesive agent is able to be cured by ultraviolet light irradiated from a direction orthogonal to the plate thickness of the transparent sheets.

A thermosetting-type adhesive agent may also be used as the adhesive agent, and the adhesive agent may be cured by induction heating, dielectric heating (microwaves), or furnace heating.

In the case of the method for producing a light control panel according to the present invention, the mirror sheets may be preliminarily attached to one side or both sides of the transparent sheets, and transparent sheets having mirrors to which the mirror sheets are attached may be laminated.

In the case of the method for producing a light control panel according to the present invention, it is preferable for the thickness of the transparent sheets to be in the range of 300 to 1000 µm, and for the thickness of the mirror sheets to be in the range of 30 to 100 µm. Easy inflection is allowed in these ranges even when mirror sheets are those in which metal having high light reflectivity such as aluminum and silver is deposited on one side or both sides of glass plates, and Ra value for the degree of mirror surface roughness stays low. Advantageous Effects of Invention

In the case of the method for producing a light control panel according to the present invention, since the mirror surfaces to be arranged between each transparent sheet is produced not by deposition but by using independent mirror sheets, the production process becomes extremely simplified, and light control panels can be produced at a low cost, thereby enabling the provision of an optical imaging apparatus that forms a volumetric image at a lower cost.

Especially, when a UV curing-type adhesive agent is used as the adhesive agent to join the transparent sheets and the mirror sheets, the adhesive agent can be cured by irradiating ultraviolet light from the lateral side of the block.
Additionally, even when a thermosetting-type adhesive agent is used, the adhesive agent can be easily heated and cured by induction heating, microwaves, or furnace heating.

### BRIEF DESCRIPTION OF DRAWINGS

FIG. 1 is an explanatory diagram of a method for producing a light control panel according to one embodiment of the present invention.
FIG. 2 is an explanatory diagram of an optical imaging apparatus in which light control panels produced by the same method is used.
FIG. 3 is an explanatory diagram of processes of the same method.
FIG. 4 is an explanatory diagram of processes of the same method.

### DESCRIPTION OF EMBODIMENTS

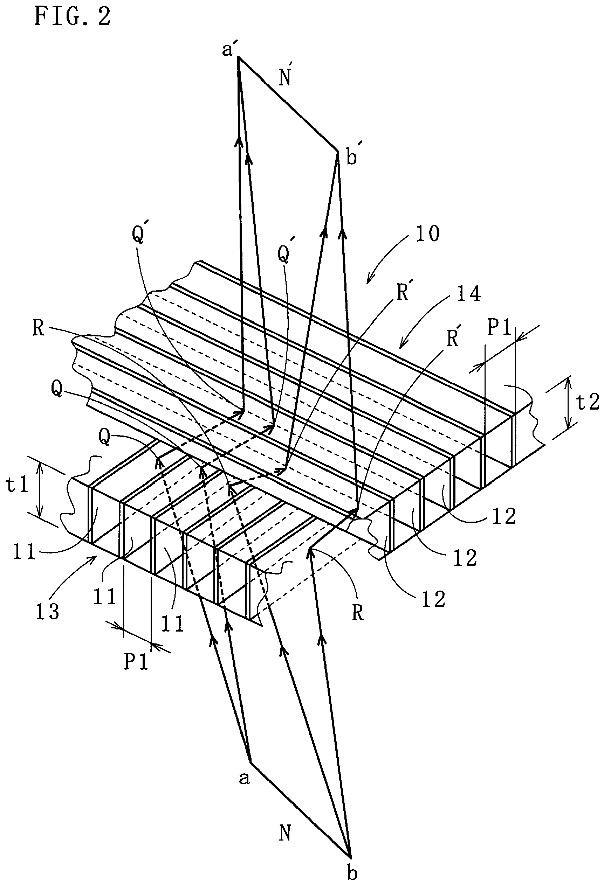

Next, with reference to the accompanying drawings, descriptions will be given on a method for producing a light control panel according to examples useful for understanding the present invention and an embodiment of the present invention. First, with reference to FIG. 2, descriptions will be given on an optical imaging apparatus 10 in which light control panels produced by a method for producing a light control panel according to one embodiment of the present invention are used.

As illustrated in FIG. 2, the optical imaging apparatus 10 is produced by using a first light control panel 13 and a second light control panel 14 formed by arranging, inside two transparent flat plates in the thickness direction of the transparent flat plates, a number of belt-like planar light-reflective portions 11 and 12 consisting of metallic reflective surfaces (e.g., aluminum, silver, titanium, tin, etc.) at a constant pitch p1, and making one side of each of the first and the second light control panels 13 and 14 face to face and coherent with each other in a manner that makes the planar light-reflective portions 11 and the planar light-reflective portions 12 cross (e.g., orthogonal to) one another. The planar light-reflective portions 11 and 12 are arranged perpendicularly to the surfaces of the transparent flat plates, however, they may also be arranged inclined.

Here, it is preferable for the pitches p1 between the planar light-reflective portions 11 and between the planar light-reflective portions 12 each to be approximately 0.1- to 3-fold (more preferably, 0.1- to 2-fold, even more preferably, 0.2- to 0.5-fold) of the thicknesses t1 and t2 of the first and the second light control panels 13 and 14. Although the thicknesses t1 and t2 of the first and the second light control panels 13 and 14 vary depending on the intended use, they are in the range of 0.5 to 10 mm, the first and the second light control panels 13 and 14 each have, for example, 300 to 2000 pieces of the planar light-reflective portions 11 and 12. Hence, if the first and the second light control panels 13 and 14 are made to be square-shaped in planar view, the optical imaging apparatus 10 having 90,000 to 4,000,000 picture elements can be obtained.

In the case of the optical imaging apparatus 10, light rays from a point a of an object N regularly reflect at points Q of the planar light-reflective portions 11 of the first light control panel 13, subsequently reflect at points Q' of the planar light-reflective portions 12 of the second light control panel 14, and become concentrated at a point a'. Light rays from a point b of the object N reflect at points R of the planar light-reflective portions 11 of the first light control panel 13, the light rays further reflect at points R' of the planar light-reflective portions 12 of the second light control panel 14 and become concentrated at a point b'. Therefore, by using this optical imaging apparatus 10, the object N forms a volumetric image N' at a position symmetrical about the optical imaging apparatus 10. Details on these techniques are described in WO 2009/131128.

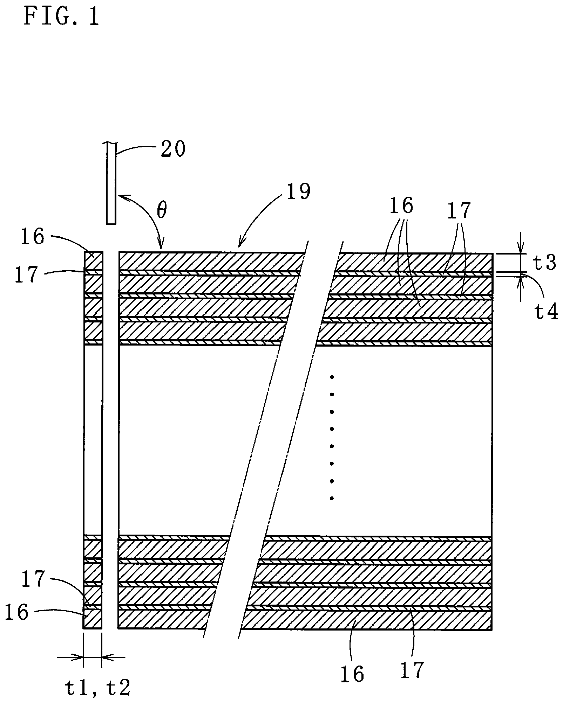

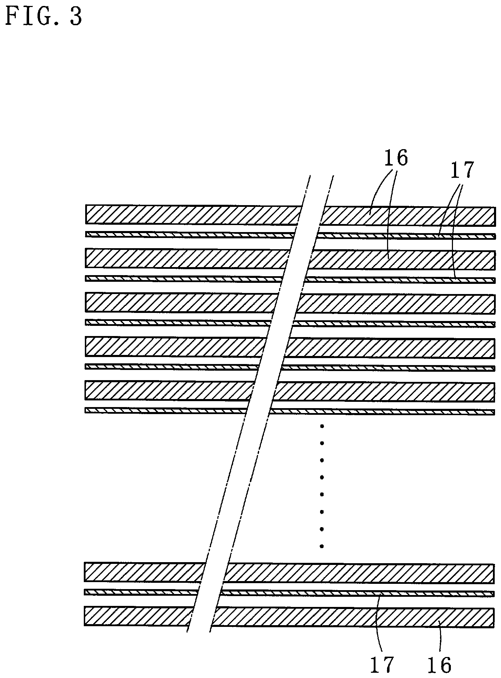

Next, with reference to FIGS. 1, 3 and 4, descriptions will be given on a method for producing a light control panel according to an example. As illustrated in FIG. 3, the number of transparent sheets 16 required in accordance with the size of an optical imaging apparatus 10 to be produced is prepared. The thickness t3 of the transparent sheets 16 (e.g., 300 to 1000 µm) determines the pitches p1 between the planar light-reflective portions 11 and between the planar light-reflective portions 12. The transparent sheets 16 are preferably pieces of glass, however, can also be pieces of transparent plastic (e.g., acrylic resin), ceramic and the like.

Then, mirror sheets 17 with a thickness t4 of, for example, approximately 30 to 100 µm, and consisting of glass plates having a piece of metal excluding copper and gold deposited or plated on one side or both sides thereof are prepared in plurality. However, since mirror sheets 17 are generally rolled in a roll shape, as illustrated in FIG. 3, mirror sheets 17 in a rolled state having, for example, transparent UV-curable resin (an example of UV curing-type adhesive agents) applied on one side or both sides are prepared. After that, the transparent sheets 16 and the mirror sheets 17 unrolled to be planar and having a predetermined size are alternately laminated. Therefore, on one side or both sides of the mirror sheets 17, metallic reflective surfaces are formed. Each pitch p1 (distance) between the planar light-reflective portions 11 and between the planar light-reflective portions 12 of the first and the second light control panels 13 and 14 is a value in which the thickness t4 of one of the mirror sheets 17 is added to the thickness t3 of one of the transparent sheets 16, and when the adhesive agent has a thickness, the thickness of the adhesive agent becomes added as well.

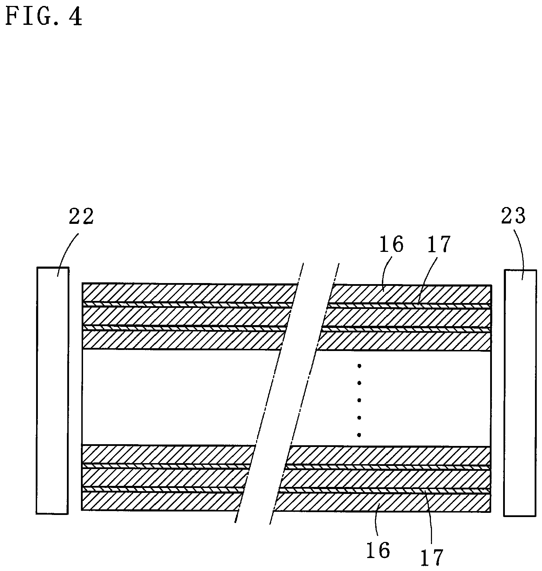

The predetermined number of the transparent sheets 16 having the mirror sheets 17 arranged thereon thereby become arranged in a stacked state. When the UV-curable resin is applied only on one side of each mirror sheet 17, the UV-curable resin becomes also applied on the surfaces of the mirror sheets 17 to come in direct contact with the other transparent sheets 16 at the time of laminating.
Accordingly, as illustrated in FIG. 4, the mirror sheets 17 and the transparent sheets 16 are alternately laminated, and ultraviolet light is irradiated from the ends of the transparent sheets 16 (i.e., from directions orthogonal to or crossing the laminated direction of the transparent sheets 16). Numerals 22 and 23 indicate ultraviolet lamps.
The UV (ultraviolet)-curable resin thereby functions as an adhesive agent, and a block 19 in which the mirror sheets 17 and the transparent sheets 16 are alternately stacked becomes formed.

The block 19 becomes cut on a surface crossing (e.g., orthogonal to) the transparent sheets 16 and the mirror sheets 17 in a manner that makes the thickness of a cutout constant by a cutter 20. The cutting angle θ of the cutter 20 is made to be 90 degrees, however, depending on, for example, the intended purposes, other angles (e.g., 70 degrees<θ<90 degrees) can also be applied. In this case, since just the cutter 20 simply cutting the block 19 causes asperity in the cut surface, after the cutting, the surface becomes ground and polished to make the thicknesses of cutouts t1 and t2. A little accidental error in these thicknesses, t1 and t2, does not cause any problem in the function. Making the cutting angle smaller than 90 degrees enables the enlargement and minification of an image.
Since the first and the second light control panels 13 and 14 are thereby produced, by joining the first and the second light control panels 13 and 14 in a manner that makes the planar light-reflective portions 11 of the first light control panel 13 and the planar light-reflective portions 12 of the second light control panel 14 cross (e.g., orthogonal to) one another, the optical imaging apparatus 10 becomes completed. In this case, a transparent plate may be arranged in between the first and the second light control panels 13 and 14.

In the case of the above example, the first and the second light control panels 13 and 14 are joined in a manner that makes each planar light-reflective portion 11 of the first light control panel 13 and each planar light-reflective portion 12 of the second light control panel 14 orthogonal to one another in planar view. However, an optical imaging apparatus can also be formed by making them cross at an angle that is smaller than 90 degrees. In the above case, the position of a real image (volumetric image) becomes different, and in some cases, the real image (volumetric image) becomes enlarged or minified.

In the above example, lamination was performed by using the separate pieces of transparent sheets 16 and mirror sheets 17, however, the first and the second light control panels can also be made by, after preparing transparent sheets having mirrors made by preliminarily sticking (or joining) the mirror sheets 17 on (to) (either one side or both sides of) the transparent sheets 16, laminating these transparent sheets having mirrors by using an adhesive agent to make a block, and cutting the block in the thickness direction of the laminated body to a predetermined cutout thickness. Also, in the above example, the mirror sheets are those in which metal having reflectivity excluding copper and gold is deposited on the thin glass plates, however, thin plastic plates (resin plates) can be used in place of the thin glass plates, representing the invention, and depending on circumstances, thin metallic foils can be used alternatively, as another example. Additionally, when sticking the mirror sheets on the transparent sheets, it is preferable for mirror surfaces of the mirror sheets (metallic reflective surfaces) to be in direct contact with the surfaces of the transparent sheets, however, when thin glass plates or thin plastic plates are used as a material of the mirror sheets, and the metallic reflective surfaces are formed only on one side, the glass plates or the plastic plates can be in direct contact with the transparent sheets.

In the above example, as an adhesive agent, a UV curing-type adhesive agent is used, however, a regular adhesive agent can alternatively be used, and a thermosetting-type adhesive agent, a hot melt and the like can also be used alternatively.
Additionally, the present invention also applies to the case where an adhesive agent that becomes cured, in place of ultraviolet light irradiation, by means of infrared heating, far-infrared heating, induction heating or dielectric heating, and depending on circumstances, that becomes cured by being heated inside a furnace body (furnace heating) or in a normal temperature setting is used.

### INDUSTRIAL APPLICABILITY

By the method for producing a light control panel according to the present invention, light control panels capable of forming a volumetric image as a real image can be produced at a low cost and in large quantity.
These light control panels can be applied to displays of televisions, mobile phones, medical equipments and other uses.

### REFERENCE SIGNS LIST

10: optical imaging apparatus, 11, 12: planar light-reflective portion, 13: first light control panel, 14: second light control panel, 16: transparent sheet, 17: mirror sheet, 19: block, 20: cutter, 22, 23: ultraviolet lamp

## Claims

1. A method for producing a light control panel that is a method for producing a first light control panel (13) and a second light control panel (14) of an optical imaging apparatus (10) each formed by arranging belt-like planar light-reflective portions (11, 12) at a constant pitch (p1) inside a transparent flat plate; and arranging opposed to each other the first light control panel (13) and the second light control panel (14) in a manner that makes the planar light-reflective portions (11) of the first light control panel (13) and the planar light-reflective portions (12) of the second light control panel (14) cross one another, the method for producing a light control panel, comprising:
a first step of preparing mirror sheets (17) consisting of rollable plastic plates each having a metallic reflective surface on both sides or one side and rolled in a roll shape, and forming a block (19) in which transparent sheets (16) made of glass or transparent plastic and the mirror sheets (17), unrolled so as to be planar, are alternately stacked and laminated; and
a second step of forming the first or the second light control panel (13, 14) by cutting out from the block (19) on a surface crossing the transparent sheets (16) and the mirror sheets (17) in a manner that makes the thickness (t1, t2) of a cutout constant.

2. The method for producing a light control panel according to claim 1, wherein
a transparent adhesive agent is used for the joining of the transparent sheets (16) and the mirror sheets (17).

3. The method for producing a light control panel according to claim 2, wherein
the transparent adhesive agent is a UV curing-type adhesive agent, and is cured by ultraviolet light irradiated from a direction orthogonal to the plate thickness (t3) of the transparent sheets (16).

4. The method for producing a light control panel according to claim 2, wherein
a thermosetting-type adhesive agent is used as the adhesive agent, and the adhesive agent is cured by induction heating, dielectric heating or furnace heating.

5. The method for producing a light control panel according to any one of claims 1 to 4, wherein
the thickness (t3) of the transparent sheets (16) is in the range of 300 to 1000 µm, and the thickness (t4) of the mirror sheets (17) is in the range of 30 to 100 µm.

## Patentansprüche

1. Verfahren zur Herstellung eines Lichtsteuerpanels, das ein Verfahren zur Herstellung eines ersten Lichtsteuerpanels (13) und eines zweiten Lichtsteuerpanels (14) einer optischen Abbildungsvorrichtung (10) ist, die jeweils dadurch gebildet werden, dass bandartige ebene lichtreflektierende Abschnitte (11, 12) mit einer konstanten Teilung (p1) innerhalb einer transparenten Flachplatte angeordnet werden; und das erste Lichtsteuerpanel (13) und das zweite Lichtsteuerpanel (14) entgegengesetzt zueinander so angeordnet werden, dass die ebenen lichtreflektierenden Abschnitte (11) des ersten Lichtsteuerpanels (13) und die ebenen lichtreflektierenden Abschnitte (12) des zweiten Lichtsteuerpanels (14) einander kreuzen, wobei das Verfahren zur Herstellung eines Lichtsteuerpanels aufweist:
einen ersten Schritt des Präparierens von Spiegelbahnen (17), die aus aufrollbaren Kunststoffplatten mit jeweils einer metallischen reflektierenden Oberfläche auf beiden Seiten oder einer Seite bestehen und in Rollenform aufgerollt sind, und des Bildens eines Blocks (19), in dem transparente Bahnen (16), die aus Glas oder
transparentem Kunststoff hergestellt sind, und die Spiegelbahnen (17), die so abgerollt sind, dass sie eben sind, abwechselnd gestapelt und laminiert sind; und
einen zweiten Schritt des Bildens des ersten oder des zweiten Lichtsteuerpanels (13, 14) durch Ausschneiden aus dem Block (19) auf einer die transparenten Bahnen (16) und die Spiegelbahnen (17) kreuzenden Oberfläche, so dass die Dicke (tl, t2) eines Ausschnitts konstant wird.

2. Verfahren zur Herstellung eines Lichtsteuerpanels nach Anspruch 1, wobei ein transparentes Haftmittel zum Verbinden der transparenten Bahnen (16) und der Spiegelbahnen (17) verwendet wird.

3. Verfahren zur Herstellung eines Lichtsteuerpanels nach Anspruch 2, wobei das transparente Haftmittel ein UV-härtendes Haftmittel ist und durch Ultraviolettlicht gehärtet wird, das aus einer Richtung abgestrahlt wird, die orthogonal zur Plattendicke (t3) der transparenten Bahnen (16) ist.

4. Verfahren zur Herstellung eines Lichtsteuerpanels nach Anspruch 2, wobei ein wärmehärtendes Haftmittel als Haftmittel verwendet wird und das Haftmittel durch Induktionserwärmung, dielektrische Erwärmung oder Ofenerwärmung gehärtet wird.

5. Verfahren zur Herstellung eines Lichtsteuerpanels nach einem der Ansprüche 1 bis 4, wobei
die Dicke (t3) der transparenten Bahnen (16) im Bereich von 300 bis 1000 µm liegt und die Dicke (t4) der Spiegelbahnen (17) im Bereich von 30 bis 100 µm liegt.

## Revendications

1. Procédé destiné à produire un panneau de contrôle de la lumière qui est un procédé destiné à produire un premier panneau de contrôle de la lumière (13), et un second panneau de contrôle de la lumière (14) d'un appareil d'imagerie optique (10), chacun d'eux étant formé en agençant des parties qui réfléchissent la lumière planes similaires à une courroie (11, 12) selon un pas constant (p1) à l'intérieur d'une plaque plate transparente ; et en agençant de manière opposée l'un par rapport à l'autre le premier panneau de contrôle de la lumière (13) et le second panneau de contrôle de la lumière (14) de telle sorte que les parties planes qui réfléchissent la lumière (11) du premier panneau de contrôle de la lumière (13), et les parties planes qui réfléchissent la lumière (12) du second panneau de contrôle de la lumière (14), se croisent les unes les autres, le procédé destiné à produire un panneau de contrôle de la lumière, comprenant :
une première étape consistant à préparer des feuilles de miroir (17) qui se composent de plaques de matière plastique qui peuvent être enroulées, chacune d'elles présentant une surface réfléchissante métallique des deux côtés, ou d'un seul côté, et étant enroulée en une forme de rouleau, et à former un bloc (19) dans lequel des feuilles transparentes (16) constituées de verre ou d'une matière plastique transparente, et les feuilles de miroir (17), déroulées de façon à être planes, sont empilées de manière alternée et stratifiées ; et
une seconde étape consistant à former le premier ou le second panneau de contrôle de la lumière (13, 14) en le découpant du bloc (19) selon une surface qui croise les feuilles transparentes (16) et les feuilles de miroir (17) de telle manière que l'épaisseur (t1, t2) d'une découpe soit constante.

2. Procédé destiné à produire un panneau de contrôle de la lumière selon la revendication 1, dans lequel :
un agent adhésif transparent est utilisé de façon à joindre les feuilles transparentes (16) et les feuilles de miroir (17).

3. Procédé destiné à produire un panneau de contrôle de la lumière selon la revendication 2, dans lequel :
l'agent adhésif transparent est un agent adhésif du type qui durcit aux UV, et qui durcit en étant irradié par une lumière ultraviolette en provenance d'une direction orthogonale à l'épaisseur de la plaque (t3) des feuilles transparentes (16).

4. Procédé destiné à produire un panneau de contrôle de la lumière selon la revendication 2, dans lequel :
un agent adhésif du type thermodurcissable est utilisé en tant qu'agent adhésif, et l'agent adhésif est durci en le chauffant par induction, en le chauffant par pertes diélectriques ou en le chauffant dans un four.

5. Procédé destiné à produire un panneau de contrôle de la lumière selon l'une quelconque des revendications 1 à 4, dans lequel :
l'épaisseur (t3) des feuilles transparentes (16) se situe dans une plage comprise entre 300 µm et 1000 µm, et l'épaisseur (t4) des feuilles de miroir (17) se situe dans une plage comprise entre 30 µm et 100 µm.
